# DEMANDE DE BREVET EUROPEEN

(11) **EP 0 896 051 A1**
(43) Date de publication de la demande: **10.02.1999**
(21) Numéro de dépôt: 98401957.0
(22) Date de dépôt: 30.07.1998
(51) Int. Cl.: C10M 173/00, C09D 5/08

(54) **Procédé de traitement de surface de pièces métalliques**

(30) Priorité: 07.08.1997 FR 9710153
(71) Demandeur: SOLLAC, 92800 Puteaux (FR)
(72) Inventeur: Morand, Claude, 13140 Miramas (FR); Kefferstein, Ronald, 13730 Saint Victoret (FR)
(74) Mandataire: Le Guen, Gérard

(57) **Abrégé**

La présent invention a pour objet un procédé de traitement de la surface d'une pièce métallique en vue de la préparer à l'emboutissage et de la protéger temporairement contre la corrosion comprenant l'application à la surface de ladite pièce d'une composition aqueuse de traitement et le séchage de ladite composition aqueuse ainsi appliquée caractérisé en ce que ladite composition aqueuse est au préalable obtenue par mélange :
- d'une solution aqueuse comprenant au moins un polyéthoxylat d'alcool ou d'acide gras et
d'une émulsion aqueuse d'huile comprenant au moins 3 à 13 % en volume d'une phase huileuse comprenant au moins de 75 à 90 % en volume d'au moins une huile minérale et de 5 % à 10 % en volume d'au moins un agent tensioactif.

Elle se rapporte en outre aux pièces métalliques ainsi obtenues.

## Description

La présente invention concerne un traitement de surface de pièces métalliques, destiné à leur conférer simultanément une protection temporaire contre la corrosion et une lubrification satisfaisante pour l'emboutissage.

Le problème de la protection des surfaces métalliques et plus particulièrement des tôles métalliques contre la corrosion a toujours été une préoccupation constante des sidérurgistes. A ces fins, de nombreuses formulations ont déjà été mises au point. Elles visent à conférer à la surface des tôles, sur lesquelles elles sont appliquées, un mode de protection soit par des films gras, notamment à base d'huiles de protection traditionnelles ou plus récemment, à partir d'un revêtement non gras (FR 92 08 037). Une approche retenue pour optimiser la résistance à la corrosion de ces revêtements a notamment consisté à incorporer dans leurs compositions, un ou plusieurs inhibiteurs de corrosion de type composés aminés, dérivés sulfonates.

Toutefois, la majorité de ces formulations ont été développées essentiellement dans le but d'accroître la tenue à la corrosion et sans chercher à améliorer conjointement leur aptitude à l'emboutissage.

Or, la tôle décapée pour emboutissage est un produit en développement, et, pour élargir l'utilisation du film protecteur à ce marché, il est impératif de lui conférer des propriétés tribologiques de manière à diminuer les risques de grippage de la tôle au cours de l'opération d'emboutissage.

La présente invention a précisément pour objectif de proposer un procédé de traitement permettant de mettre au point des films secs qui répondent donc à deux critères majeurs pour le développement des tôles décapées, une protection contre la corrosion et une amélioration à l'aptitude à l'emboutissage.

Avantageusement, le revêtement obtenu selon le procédé de la présente invention permet précisément de simplifier de manière significative, les opérations d'emboutissage sans préjudice de la résistance à la corrosion. Il permet ainsi de limiter voire de supprimer le rehuilage à la presse au cours du formage des pièces.

Plus précisément, la présente invention a pour objet un procédé de traitement de la surface d'une pièce métallique en vue de la préparer à l'emboutissage et de la protéger temporairement contre la corrosion comprenant l'application à la surface de ladite pièce, d'une composition aqueuse de traitement puis le séchage de la composition aqueuse ainsi appliquée caractérisé en ce que ladite composition aqueuse est au préalable obtenue par mélange :
- d'une solution aqueuse comprenant au moins un polyéthoxylat d'alcool ou d'acide gras et
- d'une émulsion aqueuse d'huile comprenant au moins 3 à 13 % en volume d'une phase huileuse comprenant au moins de 75 à 90 % en volume d'au moins une huile minérale et de 5 % à 10 % en volume d'au moins un agent tensioactif.

De manière inattendue, la Demanderesse a mis en évidence que l'association d'un polyéthoxylat, selon le protocole revendiqué, à une émulsion aqueuse d'huile permettait de conférer au revêtement les incorporant, un comportement avantageux tant sur le plan de la résistance à la corrosion que sur le plan emboutissage.

De manière surprenante, ce comportement est observé de manière optimale, lorsque l'on procède au mélange des deux composants via leurs solution et émulsion aqueuses respectives.

C'est ainsi qu'il s'avère avantageux de mettre d'abord le polyéthoxylat en solution dans l'eau et de lui ajouter, par la suite, l'huile soluble émulsionnée dans de l'eau. Les concentrations de chaque mélange sont bien entendu adaptées pour obtenir une composition finale dont la concentration en chaque composant est bien définie.

Vraisemblablement, le procédé de la présente invention permet de privilégier une meilleure fixation des polyéthoxylats au niveau de la surface métallique traitée. Lorsque l'on ajoute directement le polyéthoxylat dans l'huile, celui-ci se répartie uniformément dans les gouttelettes d'huile. Après application, le film formé conserve la même structure. C'est-à-dire que le film sec est formé de gouttelettes renfermant les particules de polyéthoxylat, ce qui réduit leur mobilité. En revanche, si le polyéthoxylat est mis au préalable en solution dans l'eau, lors de l'application du produit sur la surface métallique, ses particules ne sont pas enfermées dans les gouttelettes d'huile. On peut penser qu'elles possèdent une mobilité très supérieure et viennent se fixer préférentiellement au contact de la surface de la pièce. Les propriétés d'emboutissage seraient ainsi données par la fixation en priorité de ce composé au contact de la surface du métal.

Au sens de l'invention, les polyéthoxylats mis en oeuvre sont de préférence des polyéthoxylats d'alcool ou d'acide gras en C₃ à C₂₂ et comprennent environ entre 30 et 250 motifs oxyde d'éthylène.

De préférence, ils répondent à la formule générale R-O-(CH₂-CH₂-O)ₙ-H avec ROH représentant un alcool ou un acide gras en C₃ à C₂₂ et n variant entre 30 et 250.

De préférence, on ajuste le nombre de motifs "oxyde d'éthylène" par molécule de produit polyéthoxylat de manière à obtenir un polyéthoxylat présentant un indice HLB au moins égal à 14 (Balance hydrophile-lipophile - échelle de 0,1 à 20).

Le terme "HLB" (Hydrophilic Lipophilic Balance) désigne le rapport de l'hydrophobie de la partie lipophile des molécules de polyéthoxylats à l'hydrophilie des groupements solubilisants "éthoxy" des mêmes molécules ; il s'agit d'un terme couramment utilisé dans le domaine des agents de surface (voir le Traité "Techniques de l'Ingénieur", chapitre A7610 : "Les agents de surface").

De préférence, il s'agit d'un polyéthoxylat d'un ou plusieurs dérivés de la lanoline, lesdits dérivés étant des stérols, des acides gras ou des esters d'alcool gras.

Plus préférentiellement, les dérivés de la lanoline sont choisis parmi les alcools gras comme le lanostérol, le cholestérol, l'isocholestérol et les acides gras et esters dérivés de la lanoline.

Par exemple, on met en oeuvre selon l'invention, une solution aqueuse de polyéthoxylat de lanostérol, avec n, le nombre de motifs "oxyde d'éthylène", compris entre 30 et 150 et de préférence de l'ordre de 75 ou une solution de polyéthoxylat de ricin, hydrogéné ou non, avec le nombre de motifs oxyde d'éthylène compris entre 30 et 250 et de préférence de l'ordre de 200.

Avantageusement, la concentration en poids de polyéthoxylats dans la composition aqueuse de traitement varie de 0,25 à 1,5 % et de préférence est de l'ordre de 0,75 % par rapport au volume total.

Si besoin est, notamment en fonction des contraintes de stockage et d'application de ces solutions, on peut également rajouter dans sa solution aqueuse un agent antioxydant, un agent conservateur (ou bactéricide) et un agent anti-mousse.

En ce qui concerne l'émulsion aqueuse d'huile, elle peut être définie comme comprenant en dispersion dans l'eau, au moins 3 à 13 % en volume d'une phase huileuse comprenant de 75 à 90 % en volume d'au moins une huile minérale, de 5 à 10 % en volume d'au moins un agent tensioactif et de 5 à 15 % en volume d'un inhibiteur de corrosion.

De préférence, l'émulsion comprend, en dispersion dans la phase aqueuse, environ 6 % en volume d'huile minérale.

L'huile contenue dans la phase huileuse de l'émulsion, peut être constituée d'une huile végétale, minérale ou animale.

Avantageusement, il s'agit d'une huile minérale de type paraffinique, naphténique ou un mélange de celles-ci.

A titre d'huile minérale préférentiellement mise en oeuvre selon la présente invention, on citera tout particulièrement l'huile soluble AQUASAFE 21® de CASTROL.

On préfère utiliser comme agent tensioactif de la phase huileuse un tensioactif de type polyoxyéthylénique.

On utilise avantageusement comme inhibiteur de corrosion dans la phase huileuse, un acide carboxylique, un alkyl-sulfonate de baryum ou de sodium ou un sel d'amine et d'acide gras.

De préférence, ladite solution aqueuse à base de polyéthoxylats d'alcool ou d'acide gras et l'émulsion aqueuse d'huile sont mélangées dans un rapport poids polyéthoxylat/poids base huileuse compris entre environ 5 et 20 % et plus préférentiellement de l'ordre de 15 %.

Selon un mode privilégié de l'invention, on introduit en outre au niveau de la phase aqueuse de la composition aqueuse de traitement, un inhibiteur de corrosion de type thioéther hétérocyclique d'acide carboxylique, sous une forme neutralisée. Celui-ci lui est incorporé sous la forme d'une solution aqueuse, distincte ou non de celle contenant le polyéthoxylat d'alcool ou d'acide gras.

De préférence, il s'agit d'un sel hydrosoluble de l'acide benzothiazolylthiosuccinique. Ce composé étant non hydrosoluble, il est présent dans ladite composition aqueuse, sous une forme neutralisée. Cette neutralisation peut être réalisée par exemple à l'acide d'ammoniaque, de morpholine, d'éthanolamine, d'éthanol ou de potasse.

Cet inhibiteur de corrosion est de préférence incorporé à raison de 1 à 10 g/l de la composition obtenue selon l'invention et plus préférentiellement à raison d'environ 2,5 g/l.

De manière surprenante, on observe, en présence de cet inhibiteur de corrosion, une amélioration des propriétés tribologiques, cette amélioration étant particulièrement significative lorsque le polyéthoxylat, mis en oeuvre, est peu éthoxylé. Ceci ressort en particulier des résultats présentés en exemple 2. Un nombre réduit en motifs oxyde éthylène permet ainsi de conférer une meilleure résistance à la corrosion.

Selon un mode privilégié de l'invention, une composition aqueuse conforme à la présente invention et contenant un sel hydrosoluble de l'acide benzothiazolylthiosuccinique, comprend un polyéthoxylat d'alcool ou d'acide gras possédant un nombre de motifs oxyde d'éthylène plus réduit comparativement à une composition aqueuse, exempte en ce sel hydrosoluble de l'acide benzothiazolylthiosuccinique.

En ce qui concerne l'application de la composition selon l'invention, au niveau de la pièce métallique à traitée, elle peut être réalisée par tout moyen conventionnel approprié, de type dispositif de revêtement au rouleau ou analogue ou encore par pulvérisation. La pièce ainsi traitée, subit ensuite un séchage afin d'obtenir un film lubrifiant sec, conforme à l'invention.

Ce séchage réalisé de préférence par chauffage peut être, par exemple, réalisé en portant la pièce traitée à une température comprise entre 50 et 100°C pendant un temps variant entre environ 20 secondes à 10 minutes. Il est poursuivi jusqu'à élimination complète de l'eau de manière à conférer au film les meilleures performances.

De préférence le film sec appliqué à la surface de la pièce présente une densité surfacique comprise entre 300 et 800 et plus préférentiellement supérieure à 500 mg/m².

La présente invention a également pour objet une pièce métallique revêtue d'un film lubrifiant sec, obtenu conformément au procédé revendiqué.

Au sens de l'invention, on entend par "pièces métalliques", des plaques d'épaisseurs moyennes laminées à chaud, des tôles minces laminées à chaud, des tôles d'acier laminées à froid ainsi que divers genres de plaques et tôles d'acier revêtue comme les tôles électrozinguées, les tôles galvanisées ou les tôles galvanisées alliées.

Comme énoncé précédemment, les pièces métalliques revêtues d'un film lubrifiant sec de composition telle que définie selon l'invention, s'avèrent résistantes à la corrosion. Par ailleurs, les revêtements dérivant des compositions obtenues selon l'invention, possèdent des performances tribologiques satisfaisantes et donc avantageuses au niveau de l'emboutissage. C'est ainsi que leur caractérisation en termes de frottement montre qu'ils présentent un coefficient de frottement réduit comparativement aux revêtements classiques.

Les compositions selon l'invention peuvent en outre être appliquées efficacement sur des plaques métalliques déjà revêtues d'un film sec, et s'avèrent donc particulièrement avantageuses pour traiter des spires et rives extérieures de bobine déjà revêtues d'un revêtement non gras ou pour protéger des pièces métalliques décapées.

D'autres avantages du procédé de l'invention apparaîtront à la lecture des exemples présentés ci-après à titre non limitatif de la présente invention.

### MATERIEL ET METHODE

### 1) Huiles.

- Une huile de protection utilisée sur les tôles comme protection contre la corrosion (QUAKER 80.21).
- une huile soluble AQUASAFE 21 de CASTROL, composée de 80 à 95 % d'une base minérale (naphténique et paraffinique). Des tensioactifs sont incorporés à ce produit afin de le rendre émulsionnable dans l'eau. Les propriétés de résistance à la corrosion sont obtenues grâce à des acides gras et à des dérivés du type amide.

### 2) Polyéthoxylats.

- un éthoxylat de lanostérol (lanoline éthoxylée avec 75 radicaux d'oxyde d'éthylène)
- un éthoxylat hydrogéné d'huile de ricin avec 200 radicaux d'oxyde d'éthylène (éthoxylat hydrogéné ou non hydrogéné).

### 3) L'acide benzothiazolylthiosuccinique commercialisé par CIBA sous le nom d'IRGACOR 252.

La mise en solution aqueuse de l'ABTS, se fait après neutralisation à l'ammoniaque ou à l'éthanolamine.

### METHODES.

### 1) Caractérisation en frottement des compositions testées.

Les essais de frottement monopasse sont réalisés à pression variable de 200 à 2000 daN avec des outils en acier rapide d'une surface de 1 cm². La vitesse de déplacement est de 2 mm/s.

Les éprouvettes sont prises dans des tôles à chaud décapées, nuance BS2, en épaisseur de 2 mm.

### 2) Caractérisation en corrosion.

Les différentes compositions testées sont appliquées sur des éprouvettes décapées d'un acier E 24, dans des proportions telles que la densité surfacique finale déposée sur éprouvettes soit de l'ordre de 500 mg/m² (0,5 µm). L'application se fait par aspersion à l'aide d'une huileuse de laboratoire.

Les tests suivants sont effectuées en enceintes climatiques :
- Paquets serrés - cycles transport
- humidotherme (cycle FKW - DIN 50017)

### EXEMPLE 1

### Influence du mode de préparation de la composition du traitement sur les propriétés tribologiques du revêtement correspondant.

Pour se faire, on mélange un polyéthoxylat hydrogéné d'huile de ricin avec 200 radicaux d'oxyde d'éthylène à une huile Aquasafe 21, dans un rapport poids polyéthoxylat/poids base huileuse de 15 % selon les 4 protocoles suivants :
- Le polyéthoxylat est directement introduit dans l'huile Aquasafe 21 puis on introduit le mélange dans de l'eau ( protocole a).
- L'huile Aquasafe 21 est mise dans l'eau, puis on rajoute le polyéthoxylat (protocole b).
- Le polyéthoxylat est introduit dans l'eau puis on ajoute de l'huile Aquasafe 21, également en solution aqueuse (protocole c).
- Ajout du polyéthoxylat dans un volume d'eau défini, préparation de l'émulsion aqueuse à base d'Aquasafe 21 dans un même volume d'eau puis mélange des 2 préparations (protocole d).

L'incidence de chacun de ces 4 procédés est appréciée en déterminant la différence en coefficient de frottement entre une pression de 200 daN et une pression de 2000 daN, observée pour chacune des compositions testées.

La caractérisation en frottement est réalisée selon le protocole décrit en Matériels et Méthodes.

**TABLEAU I**

| Protocole | (a) | (b) | (c) | (d) |
|---|---|---|---|---|
| diminution du coefficient de frottement notée lorsque la pression de frottement passe de 200 daN à 2 000 daN | 0,09 | 0,075 | 0,085 | 0,150 |

De l'interprétation des résultats, il ressort clairement que le protocole a une incidence significative sur les performances du revêtement. Ces performances sont ainsi optimales en termes de frottement, lorsque l'on procède au mélange des deux composés, sous la forme de leurs solutions aqueuses respectives (protocole (d)). A l'évidence, c'est selon ce protocole que l'on privilégie le mieux la fixation du polyéthoxylat à la surface métallique. L'additif n'est pas fixé par les particules d'huile. Il se fixe préférentiellement à la surface du métal (mobilité de l'additif).

Selon ce protocole, on laisse vraisemblablement le temps aux micelles de l'huile Aquasafe 21 et aux micelles de polyéthoxylat hydrogéné d'huile de ricin de se former dans leurs solutions respectives. On a alors dans la composition de traitement finale, une proportion importante de polyéthoxylat sous forme de micelles autonomes qui ont une capacité d'adsorption sur le métal optimale. On privilégie donc un état qui permet au polyéthoxylat d'être plus proche de la surface de métal traitée, ce qui conduit à un coefficient de frottement optimum.

Dans le cas des formulations b et c, ce nombre de micelles de polyéthoxylat est plus réduit du fait qu'une partie des molécules de polyéthoxylat est fixée par les micelles de l'huile Aquasafe 21, ce qui a pour effet de disperser le polyéthoxylat dans l'intégralité du film. Il n'est pas présent uniquement en contact avec la surface du métal traitée et il s'en suit des propriétés en termes de frottement amoindries.

### EXEMPLE 2

### Influence du nombre de radicaux d'oxyde d'éthylène présent dans le polyéthoxylat.

Cet essai a été réalisé avec deux polyéthoxylats, un polyéthoxylat d'huile de ricin et un polyéthoxylat de lanostérol pour un nombre de radicaux oxyde d'éthylène variant entre 0, 30, 75 et 200.

Chaque polyéthoxylat testé en solution aqueuse est ajouté à raison de 0,75 % en poids à une émulsion aqueuse de composition B ou D telle que définie dans le tableau II ci-dessous.

**TABLEAU II**

| | |
|---|---|
| Produit B | Emulsion aqueuse à base de 6 % d'huile soluble Aquasafe 21 |
| Produit D | Produit B + 2,5 g/l d'ABTS avec pH stabilisé entre 8,5 et 9 par ajout d'éthanolamine |

Les propriétés en termes de frottement, des revêtements correspondants sont appréciées selon le protocole décrit en Matériel et Méthode.

Le tableau III présenté ci-après rend compte du coefficient de frottement observé pour une force de serrage de 2000 daN.

**TABLEAU III**

| Dérivé Polyéthoxylat | LANOSTEROL | | RICIN | | TEMOIN sans Polyéthoxylats |
|---|---|---|---|---|---|
| Nombre de radicaux éthoxy | 30 | 75 | 30 | 200 | |
| en mélange avec Produit B (sans ABTS) coefficient de frottement mesuré à | | | | | Produit B |
| 2000 daN | 0,125 | 0,080 | 0,125 | 0,070 | 0,13 |
| en mélange avec Produit D (ABTS à 2,5 g/l) coefficient de frottement mesuré à | | | | | Produit D |
| 2000 daN | 0,075 | 0,060 | 0,075 | 0,040 | 0,1 |
| Diminution du coefficient de frottement | 0,05 | 0,02 | 0,05 | 0,03 | 0,03 |

Pour l'éthoxylat de lanostérol, la meilleure performance est obtenue avec le produit D avec 75 radicaux. Pour l'éthoxylat de l'huile de ricin, c'est avec 200 radicaux que l'on note la plus grande diminution du coefficient de frottement.

Ces résultats montrent que plus l'additif est soluble dans l'eau, du fait d'un nombre important en motifs éthoxylat, meilleures sont les performances en frottement. De plus on constate un effet de synergie favorable entre les polyéthoxylats et l'ABTS, particulièrement significatif lorsque le polyéthoxylat possède un nombre en motifs oxyde éthylène plus faible, à savoir 75 pour le dérivé d'huile de Ricin et 30 pour le dérivé de lanostérol.

### EXEMPLE 3

### Influence de la concentration en polyéthoxylat par rapport à l'émulsion aqueuse.

L'huile Aquasafe 21 est incorporée dans de l'eau à une concentration de 5 % en volume en phase huileuse. On procède à l'ajout dans cette émulsion, d'une solution aqueuse d'un polyéthoxylat de lanostérol à 75 motifs OE à des concentrations variant entre 5 et 20 % (poids/poids) de la quantité en huile Aquasafe 21 soit 0,25 à 1 % du volume de la composition finale.

Le tableau IV ci-après rend compte des résultats observés en terme de diminution de frottement.

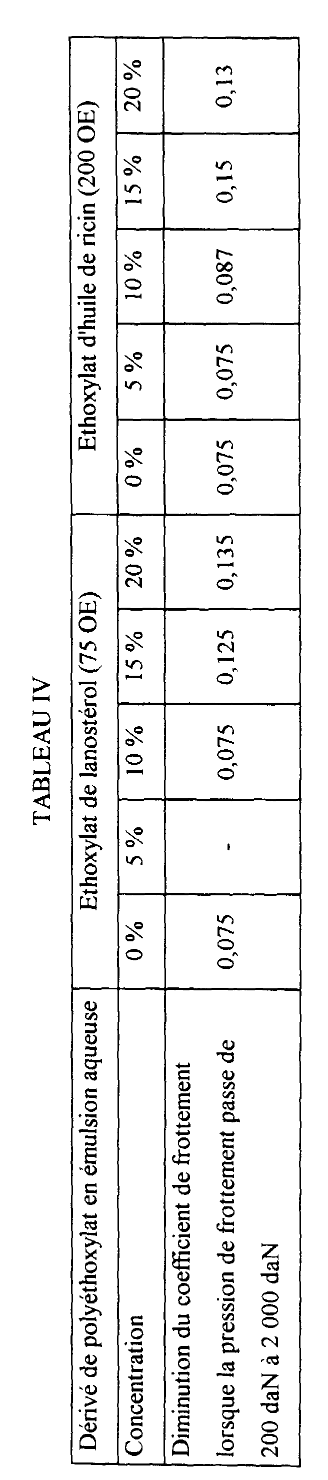

Les meilleurs résultats sont obtenus pour une concentration proche de 15 % soit une concentration de 0,75 % par rapport au volume total de la composition de traitement.

### EXEMPLE 4

### Comparaison d'une composition obtenue selon l'invention avec des huiles d'emboutissages conventionnelles.

La composition selon l'invention est le produit D présenté en exemple 2 et additivé d'un polyéthoxylat hydrogéné d'huile de ricin à 200 motifs oxyde éthylène OE à raison de 0,75 % en poids de la composition finale. Elle est dénommée Produit E.

Cet exemple a pour but d'observer la compatibilité d'huiles classiques employées pour des traitements classiques de huilage (de protection et/ou d'emboutissage) avec le traitement selon l'invention.
- Huile entière MN 181 de la Société CRODA,
- Huile entière V14 de la Société FUCHS,
- Huile soluble 450 de la Société CALOTTE,
- Huile soluble 72CC de la Société QUACKER.

Dans un premier temps, on compare les performances tribologiques obtenues après un seul traitement de lubrification, soit selon l'invention, soit après huilage classique.

Pour effectuer ces tests, dans le cas des huiles entières, on applique environ 2 g/m² alors que dans le cas des huiles solubles ou du traitement selon l'invention, on applique environ 500 mg/m².

Les résultats des essais sont reportés dans le tableau V.

Dans un second temps, on évalue les performances tribologiques obtenues après deux traitements de lubrification, d'abord un traitement selon l'invention puis un huilage classique ; par comparaison avec les résultats de la première série, on peut déduire si les deux traitements sont compatibles ou pas.

Les résultats des essais sont reportés dans le tableau V.

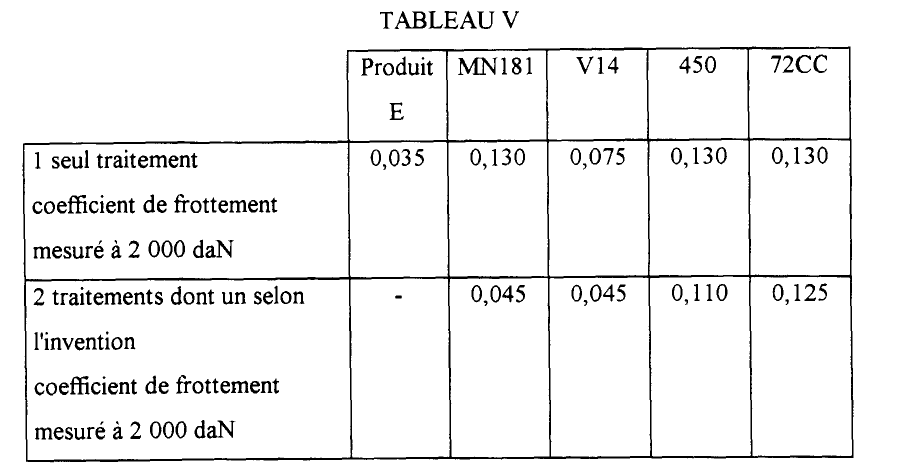

Dans le cas où on effectue un seul traitement, on observe que le traitement selon l'invention apporte de meilleures propriétés tribologiques au regard des traitements de huilage classique ; dans la majorité de cas, on peut donc envisager d'emboutir directement et sans re-huilage des tôles traitées selon l'invention.

Dans les cas où le re-huilage des tôles s'avérerait nécessaire (2 traitements), on constate qu'on ne conserve de bonnes propriétés tribologiques qu'en utilisant des huiles entières et les performances tribologiques obtenues dépendent principalement du traitement selon l'invention et non pas de la qualité de l'huile entière utilisée.

### EXEMPLE 5

### Caractérisation d'une composition obtenue selon l'invention en termes de corrosion.

Différentes compositions obtenues selon le procédé de l'invention sont testées selon le protocole décrit en Matériel et Méthode par le test suivant en enceintes climatiques :
- Paquets serrés - cycles transport

Les compositions des différentes formulations testées en corrosion sont présentées ci-dessous en tableau VI :

**TABLEAU VI**

| **Modalités** | **Description de la solution appliquée** |
|---|---|
| Emulsion huile | 5 % d'huile soluble Castrol Aquasafe 21 dans eau déminéralisée pH = 9 |
| Emulsion huile + ricin avec 200 motifs OE | 5 % d'huile soluble Castrol Aquasafe 21 +0,75 % d'huile de ricin éthoxylé (7,5 g/l) dans eau déminéralisée pH = 8,5 |
| Emulsion huile + lanostérol avec 75 motifs OE | 5 % d'huile soluble Castrol Aquasafe 21 + 0,75 % d'éthoxylat de lanostérol (7,5 g/l) dans eau déminéralisée pH = 8,5 |
| Emulsion huile + ABTS + ricin avec 200 motifs OE | 5 % d'huile soluble Castrol Aquasafe 21 + 0,75 % d'huile de ricin éthoxylé + 0,25 % d'ABTS + éthanolamine dans eau déminéralisée pH = 9 |
| Emulsion huile + ABTS + lanostérol avec 75 motifs OE | 5 % d'huile soluble Castrol Aquasafe 21 + 0,75 % d'éthoxylat de lanostérol + 0,25 % d'ABTS + éthanolamine dans eau déminéralisée pH = 9 |

Détail du cycle de transport (1 cycle = 32 heures) :
- 10 h à 40°C avec 95 % de taux d'humidité (RH)
- 4 h à 20°C avec 80 % de taux d'humidité (RH)
- 10 h à -5°C avec 0 % de taux d'humidité (RH)
- 8 h à 30°C avec 85 % de taux d'humidité (RH)

Dans la configuration "cycle de transport", les essais sont réalisés sur paquets serrés dans les conditions suivantes :
- chaque cas de figure est représenté par 4 éprouvettes ;
- les observations s'effectuent tous les trois cycles. Les paquets sont ouverts et on observe l'état des interfaces.

Nous avons observé les résultats suivants :

**TABLEAU VII**

| **Modalités (appliquées à 500 mg/m**^{**2**}**)** | **Nombre de cycles "transport" avant apparition de corrosion** |
|---|---|
| Emulsion huile | 3-5 cycles |
| Emulsion huile + ricin | 4 cycles |
| Emulsion huile + lanostérol | 4 cycles |
| Emulsion huile + ABTS + ricin | 8 cycles |
| Emulsion huile + ABTS + lanostérol | 7 cycles |

Ces résultats montrent en particulier que les compositions obtenues selon l'invention, par ajout d'ABTS et d'un polyéthoxylat sous forme d'une solution aqueuse, à une émulsion huile conduisent à des revêtements de propriétés avantageuses en termes de résistance à la corrosion.

## Revendications

1. Procédé de traitement de la surface d'une pièce métallique en vue de la préparer à l'emboutissage et de la protéger temporairement contre la corrosion comprenant l'application à la surface de ladite pièce d'une composition aqueuse de traitement et le séchage de ladite composition aqueuse ainsi appliquée caractérisé en ce que ladite composition aqueuse est au préalable obtenue par mélange :
- d'une solution aqueuse comprenant au moins un polyéthoxylat d'alcool ou d'acide gras et
- d'une émulsion aqueuse d'huile comprenant au moins 3 à 13 % en volume d'une phase huileuse comprenant au moins de 75 à 90 % en volume d'au moins une huile minérale et de 5 % à 10 % en volume d'au moins un agent tensioactif.

2. Procédé selon la revendication 1, caractérisé en ce que le polyéthoxylat d'alcool ou d'acide gras est un polyéthoxylat d'alcool ou d'acide gras en C₃ à C22 comprenant environ 30 à 250 motifs oxyde d'éthylène.

3. Procédé selon la revendication 1 ou 2, caractérisé en ce que le polyéthoxylat répond à la formule générale R-O-(CH₂-CH₂-O)ₙ-H avec n compris entre 30 et 250, avec R-OH représentant un alcool ou un acide gras en C₃ à C₂₂.

4. Procédé selon l'une des revendications 1 à 3, caractérisé en ce qu'il s'agit d'un polyéthoxylat d'un ou plusieurs dérivés de la lanoline, lesdits dérivés étant des stérols, des acides gras ou des esters d'alcool gras.

5. Procédé selon l'une des revendications 1 à 4, caractérisé en ce que le polyéthoxylat est choisi parmi un polyéthoxylat de lanostérol à environ 75 motifs d'oxyde d'éthylène ou un polyéthoxylat d'huile de ricin, hydrogéné ou non, avec environ 200 motifs d'oxyde d'éthylène.

6. Procédé selon l'une des revendications précédentes, caractérisé en ce que l'émulsion aqueuse d'huile comprend en dispersion dans l'eau au moins 3 à 13 % en volume d'une phase huileuse comprenant de 75 à 90 % en volume d'au moins une huile minérale, de 5 à 10 % en volume d'au moins un agent tensioactif et le cas échéant de 5 à 15 % en volume d'un inhibiteur de corrosion.

7. Procédé selon l'une des revendications précédentes, caractérisé en ce que l'émulsion comprend en dispersion dans la phase aqueuse environ 6 % en volume d'une huile minérale.

8. Procédé selon la revendication 6 ou 7, caractérisé en ce que l'huile minérale de la phase huileuse est une huile de type paraffinique, naphténique ou un mélange de celles-ci.

9. Procédé selon l'une des revendications 6 à 8, caractérisé en ce que l'inhibiteur de corrosion de la phase huileuse est un acide carboxylique, un alkyl-sulfonate de baryum ou de sodium ou un sel d'amine et d'acide gras.

10. Procédé selon l'une des revendications précédentes, caractérisé en ce que la solution aqueuse de polyéthoxylat d'alcool ou d'acide gras et l'émulsion aqueuse d'huile sont mélangées dans un rapport poids polyéthoxylat/poids base huileuse compris entre environ 5 et 20 %.

11. Procédé selon la revendication 10, caractérisé en ce que ce rapport est de l'ordre de 15 %.

12. Procédé selon l'une des revendications précédentes, caractérisé en ce que la composition aqueuse de traitement comprend dans sa phase aqueuse en outre un thioéther hétérocyclique d'acide carboxylique sous forme neutralisée.

13. Procédé selon la revendication 12, caractérisé en ce que ledit thioéther est mélangé à l'émulsion aqueuse d'huile sous la forme d'une solution aqueuse, distincte ou non de celle contenant le polyéthoxylat d'alcool ou d'acide gras.

14. Procédé selon la revendications 12 ou 13, caractérisé en ce qu'il s'agit d'un sel hydrosoluble de l'acide benzothiazolylthiosuccinique.

15. Procédé selon la revendication 12, 13 ou 14, caractérisé en ce que le thioéther hétérocyclique d'acide carboxylique est présent à raison de 1 à 10 g/l et de préférence à raison d'environ 2,5 g/l de ladite composition aqueuse.

16. Procédé selon la revendication 14 ou 15, caractérisé en ce qu'une composition aqueuse de traitement contenant un sel hydrosoluble de l'acide benzothiazolylthiosuccinique, comprend un polyéthoxylat d'alcool ou d'acide gras possédant un nombre de motifs oxyde d'éthylène plus réduit comparativement à une composition aqueuse de traitement exempte en ce sel hydrosoluble de l'acide benzothiazolylthiosuccinique.

17. Procédé selon l'une des revendications précédentes, caractérisé en ce que le revêtement obtenu à l'issue de l'étape de séchage présente, sur la surface traitée, une densité surfacique comprise entre 300 et 800 mg/m².

18. Pièce métallique revêtue d'un film obtenu selon le procédé défini selon l'une des revendications 1 à 17.
